# EUROPÄISCHE PATENTSCHRIFT

(11) **EP 0 509 444 B1**
(45) Veröffentlichungstag und Bekanntmachung des Hinweises auf die Patenterteilung: **07.06.1995**
(21) Anmeldenummer: 92106423.4
(22) Anmeldetag: 14.04.1992
(51) Int. Cl.: A47J 17/08

(54) **Handgerät zum Schälen von länglichem Gemüse**
Hand tool for peeling elongated vegetables
Outil à main pour éplucher des légumes allongés

(30) Priorität: 17.04.1991 DE 9104677 U
(43) Veröffentlichungstag der Anmeldung: 21.10.1992
(73) Patentinhaber: Westmark Schulte GmbH & Co. KG, D-58849 Herscheid (DE)
(72) Erfinder: Henning, Wilhelm, Dr., W - 4320 Hattingen (DE); Andersen, Ute, W - 4600 Dortmund 50 (DE)
(74) Vertreter: Peerbooms, Rudolf, Dipl.-Phys.

(56) Entgegenhaltungen:
- EP-A- 0 451 487
- DE-B- 1 139 945
- DE-U- 9 107 005
- FR-A- 2 651 424

## Beschreibung

Die Erfindung betrifft ein Handgerät zum Schälen von länglichem Gemüse-Schälgut, insbesondere von Spargel, Möhren, Gurken, Rettichen, Schwarzwurzeln od. dgl., in Form einer mit einer Hand umgreifbaren Handzange mit zwei gegen Federkraft um eine Schwenkachse gegeneinander in eine Arbeitsstellung schwenkbaren Betätigungshebeln, die an ihren freien Enden sich gegenüberliegende Schälmesser tragen, zwischen denen das Schälgut im wesentlichen parallel zur Schälrichtung mit der anderen Hand gehalten wird.

Ein derartiges Handgerät ist aus der DE-AS 1 139 945 bekannt, bei dem jeder Betätigungshebel an seinem freien Ende ein Schälmesser trägt, das entlang der Längserstreckung des zugehörigen Betätigungshebels angeordnet ist. Mit dem bekannten Handgerät kann das Schälgut gleichzeitig nur an zwei Seiten geschält werden, jedoch sind dort die Schälmesser je nach Dicke des Schälgutes um unterschiedliche Winkel gegeneinander geneigt, was zu einem Nachschneiden auch an bereits geschälten Stellen und damit zu unerwünschten Schalverlusten führt.

Der Erfindung liegt die Aufgabe zugrunde, den zum Schälen erforderlichen Zeitaufwand zu verringern und den Schälvorgang so zu vereinfachen, daß das Handgerät auch bei krummem, gewundenem Schälgut problemlos benutzbar ist.

Ausgehend von einem Handgerät der eingangs beschriebenen Art, ist zur Lösung dieser Aufgabe erfindungsgemäß vorgesehen, daß an den Enden beider Betätigungshebel je ein Schälmesserpaar angebracht ist, das aus jeweils zwei, einen Winkel zueinander bildenden Schälmessern besteht, daß die Schälmesserpaare mit ihrer offenen Seite gegeneinander gerichtet sind, daß die Schälmesser in Schälrichtung derart gegeneinander versetzt sind, daß die Schälmesserpaare unter gegenseitiger Überlappung und gleichzeitiger Anlage ihrer vier Schälmesser an das Schälgut zusammenschwenkbar sind, und daß die Betätigungshebel quer zu der von ihnen aufgespannten Ebene gegen Federkraft auslenkbar sind.

Durch die Erfindung werden eine Reihe von Vorteilen erreicht. Da nunmehr vier Schälmesser gleichzeitig am Schälgut angreifen, ist das Handgerät nur noch wenige Male am Schälgut vorbeizuziehen, wobei beispielsweise im Fall von Spargelstangen im allgemeinen ein zweimaliges Entlangziehen genügt. Ein weiterer entscheidender Vorteil liegt in der feinfühligen, selbsttätigen Anschmiegung der Schälmesser an das Schälgut, was insbesondere im Fall von unrundem, z.B. ovalem, krummem und sogar gewundenem Schälgut ein gleichmäßiges Schälen mit allen vier Messern sicherstellt. Zur selbsttätigen Anschmiegung der Messer trägt entscheidend das Merkmal bei, daß die Betätigungshebel nicht nur gegeneinander schwenkbar sind, sondern selbsttätig senkrecht zu dieser Schwenkebene auslenkbar sind.

Gemäß einer bevorzugten Ausführungsform der Erfindung kann vorgesehen werden, daß die Schälmesser bei jedem Schälmesserpaar in Schälrichtung gegeneinander versetzt sind und daß jeweils die beiden Schälmesser, die in der Arbeitsstellung an sich gegenüberliegenden Seiten des Schälgutes angreifen, den gleichen Abstand zur Schwenkachse der Betätigungshebel aufweisen. Durch diese Maßnahme ist erreicht, daß jeweils die beiden Schälmesser, die an gegenüberliegenden Seiten des Schälgutes angreifen, in einer Ebene liegen, die senkrecht oder etwa senkrecht zur Schälrichtung steht. Hierdurch wird der mit den vier Schälmessern ausgeübte Schneiddruck vergleichmäßigt.

Die Schälmesser jeden Paares sind vorteilhafter Weise um einen Winkel zwischen 45° und 135°, insbesondere von 90°, gegeneinander geneigt.

Die Betätigungshebel sind bevorzugt gegenüber einer Ebene, die von der Schälrichtung und von der Verbindungslinie der freien Enden der Betätigungshebel aufgespannt ist, um einen Winkel zwischen 30° bis 90° geneigt. Hierdurch ist der Handgriffbereich der Betätigungshebel aus der Schälrichtung herausgehoben, was die Handhabung wesentlich erleichtert.

In Weiterbildung der Erfindung können jeweils die beiden sich gegenüberliegenden Schälmesserpaare in entgegengesetzte Richtungen um einen gleichen Anstellwinkel, der etwas unter 90°, vorzugsweise bei 80°, liegt, gegenüber der Schälrichtung geneigt sein. Hierdurch wird ein sogenannter "ziehender Schnitt" erreicht, bei dem die Schneiden schräg gegen die Schälrichtung angestellt sind. Die durch solche, schräg angestellte Schneiden bewirkte Querverschiebung des Schälgutes wird dadurch kompensiert, daß die Anstellrichtungen der Schälmesserpaare jeweils entgegengesetzt sind.

Der Erfindung zufolge können die Betätigungshebel in Richtung der Schwenkachse biegeelastisch oder schwenkbar gelagert sein, um die selbsttätige Auslenkbarkeit der Betätigungshebel quer zu ihrer Hauptschwenkebene zu verwirklichen. Eine sehr preiswerte Ausführungsform ergibt sich hierbei dadurch, daß die Betätigungshebel zumindest im Bereich der Schwenkachse aus einem gebogenen federelastischen Drahtstück bestehen. Die Enden eines solchen gebogenen Drahtstückes sind sowohl elastisch gegeneinander schwenkbar als auch elastisch quer zu dieser Schwenkebene auslenkbar. Das Drahtstück kann hierbei im mittleren Bereich eine aus einer oder mehreren Windungen bestehende Schlaufe aufweisen, deren Mittelachse parallel zur Schwenkachse gerichtet ist. Bei der Handhabung kann das Handgerät durch einen durch die Schlaufe gesteckten Finger an der Hand quasi arretiert werden, so daß das Handgerät sowohl bei der ziehenden Schälbewegung als auch bei seiner Rückführung bequem gehalten werden kann.

Alternativ kann der Erfindung zufolge vorgesehen werden, daß die Betätigungshebel aus einem Flachmaterialstreifen aus Stahl oder Kunststoff bestehen, der im Bereich der Schwenkachse und über den Griffbereich hinweg hochkant steht und an den beiden Enden in um etwa 90° verdrehte Abschnitte übergeht, die die Halter tragen. Hierbei können die Betätigungshebel und die Halter samt ihrer Abwinklungen und ihrer Winkelstücke aus einem einzigen Stanzbiegeteil oder einem einstückigen Kunststoffspritzteil bestehen.

Dem Handgerät können der Erfindung zufolge Abdeckhauben zur Abdeckung jeweils zweier sich gegenüberliegender Schälmesser zugeordnet sein, wodurch das Schälgerät in einen Zwei-Messer-Schäler umgewandelt werden kann, bei dem das Schälgut in einer von den beiden Abdeckhauben gebildeten Führung eingefaßt ist.

Alternativ kann das Handgerät starre Handhebel aufweisen, an denen eine vorzugsweise im Bereich der Schwenkachse angebrachte Spreizfeder angreift. Hierbei ist es möglich, die Betätigungshebel über die Schwenkachse hinaus zu verlängern und an den Betätigungshebeln eine Feder angreifen zu lassen, die die Schälmesser in die Arbeitsstellung bewegt, aus der die Schälmesser durch Zusammendrücken der verlängerten Abschnitte der Betätigungshebel wieder herausbewegbar sind. Bei dieser Ausführungsform wird der Schälgutandruck nicht von Hand, sondern durch diese Feder geliefert.

Der Winkel zwischen den beiden Schälmessern eines Paares kann der Erfindung zufolge stufenlos veränderbar sein, wobei die gewählte Winkelstellung jeweils arretierbar ist. Hierdurch ist eine Anpassung des Handgerätes an Schälgut stark unterschiedlichen Durchmessers möglich.

Schließlich kann der Erfindung zufolge noch vorgesehen werden, daß ober- und unterhalb der Schälmesserpaare zwei weitere identisch ausgebildete Schälmesserpaare angeordnet sind, die in der gleichen Weise wie die erstgenannten Schälmesserpaare an zwei zusätzlichen Betätigungshebeln befestigt sind, deren Schwenkebene in einem Winkel von 45° zu der Schwenkebene der Betätigungshebel verläuft und die gleichzeitig mit diesen betätigbar sind.

Der Gegenstand der Erfindung wird im folgenden anhand der Zeichnung näher erläutert. In der Zeichnung zeigen:
- Fig. 1: in perspektivischer Ansicht ein Handgerät nach der Erfindung,
- Fig. 2: das Handgerät in einer Stirnansicht, in Richtung des Pfeiles II in Fig. 1 gesehen,

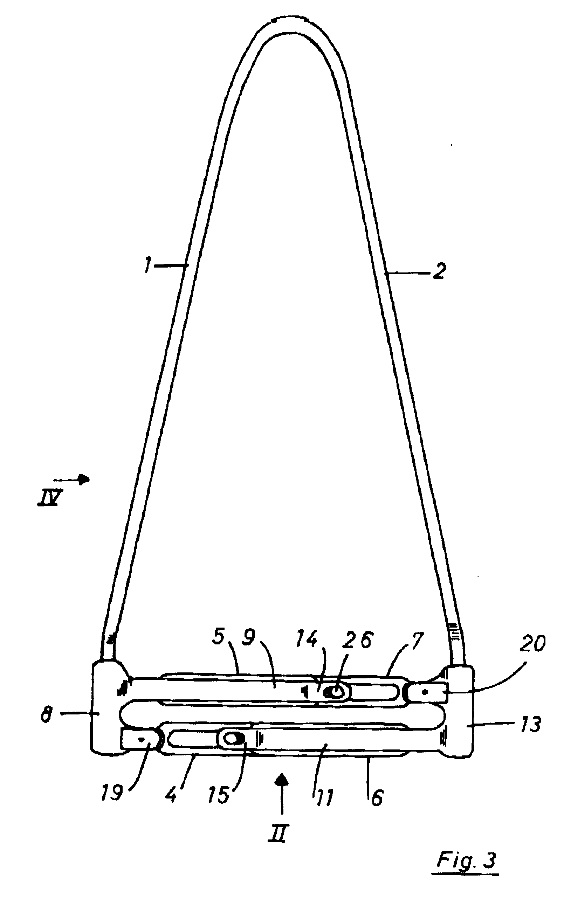

- Fig. 3: eine Draufsicht auf das Handgerät in Richtung des Pfeiles III in Fig. 1 gesehen,
- Fig. 4: das Handgerät in Seitenansicht, in Richtung des Pfeiles IV in Fig. 1 gesehen,
- Fig. 5: eine Seitenansicht auf das Handgerät in einer Arbeitsstellung, in der die Betätigungshandhebel quer zu ihrer Hauptschwenkebene gegeneinander ausgelenkt sind,
- Fig. 6: eine Stirnansicht auf das Handgerät, in Fig. 5 in Richtung des Pfeiles VI gesehen,
- Fig. 7: eine Stirnansicht auf das Handgerät, bei welchem die Betätigungshebel eine Torsion um ihre Längsachse erfahren haben,
- Fig. 8: eine abgewandelte Ausführungsform, bei der die Schälmesserpaare jeweils in entgegengesetzte Richtungen gegenüber der Schälrichtung geneigt sind,
- Fig. 9: eine abgewandelte Ausführungsform des Gelenkbereiches der Betätigungshebel,
- Fig.10: in einer Stirnansicht entsprechend Fig. 2 ein Handgerät, bei dem zwei sich gegenüberliegende Schälmesser durch eine Haube abgedeckt sind,
- Fig. 11: eine der Hauben nach Fig. 10, in perspektivischer Darstellung,
- Fig. 12: eine Abwandlung an den Betätigungshebeln,
- Fig. 13 und 14: eine weitere Ausführungsform des Handgerätes.

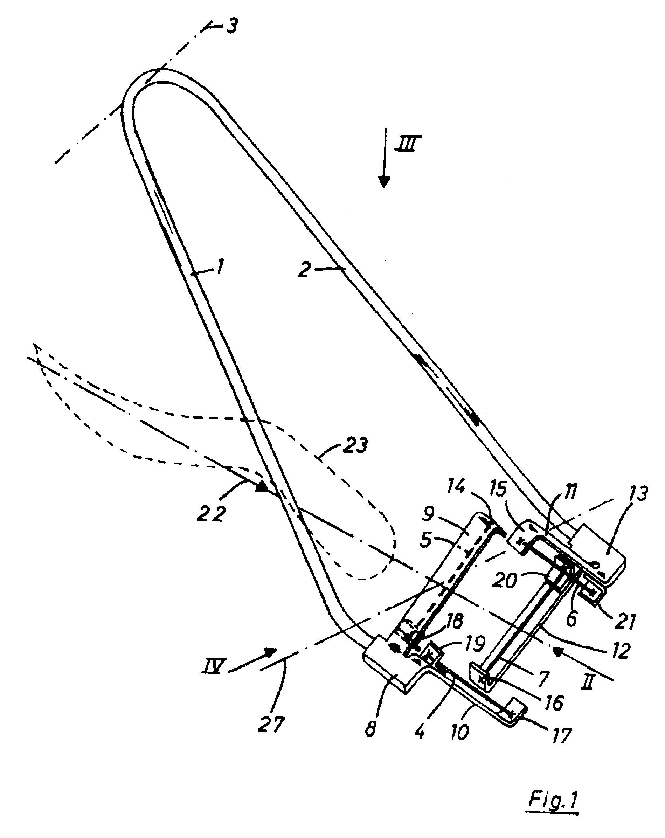

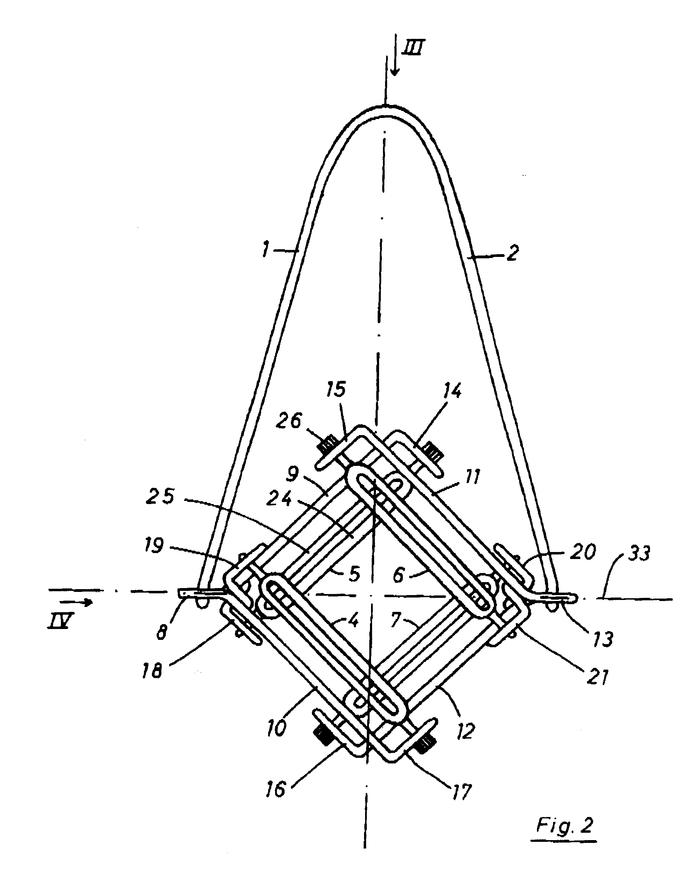

Das Handgerät besitzt die Form einer mit einer Hand umgreifbaren Handzange, die zwei Betätigungshebel 1, 2 aufweist, die hier aus einem einstückigen, gebogenen Federdraht bestehen und um eine Schwenkachse 3 gegeneinander schwenkbar sind. An den freien Enden beider Betätigungshebel 1, 2 ist je ein Schälmesserpaar 4/5 und 6/7 angebracht, das aus jeweils zwei, einen 90° Winkel zueinander bildenden Schälmessern 4, 5 und 6, 7 besteht. Die Schälmesser 4, 5 sind an einem V-förmigen Halter 8 angebracht, dessen Arme 9, 10 um einen Winkel von 90° gegeneinander geneigt sind. In gleicher Weise sind die beiden Schälmesser 6, 7 an den Armen 11, 12 eines gleichartigen V-förmigen Halters 13 befestigt, wobei die beiden V-förmigen Halter 8, 13 jeweils mit ihrer V-öffnung aufeinander gerichtet sind. Die Arme 9, 10, 11, 12 sind an ihren freien Enden mit nach innen gerichteten Abwinklungen 14, 15, 16, 17 versehen und tragen an ihren anderen Enden Winkelstücke 18, 19, 20 21, an denen die Messer jeweils auswechselbar befestigt sind. Bei jedem Halter 8, 13 sind die Arme 9, 10 bzw. 11, 12 in Schälrichtung 22, d. h. in einer die von den vier Messern gebildete Durchgangsöffnung senkrecht durchsetzenden Richtung, gegeneinander versetzt, so daß die beiden Messerpaare 4/5 und 6/7 beim Zusammendrücken der Betätigungshebel 1, 2 aneinander vorbeigehen können und in eine Stellung geschwenkt werden können, in der die vier Messer einen etwa quadratischen Durchgangsraum für das Schälgut umgrenzen, vgl. Fig. 2. Als problematisches Beispiel ist in Fig. 1 in gestrichelten Linien eine gewundene Karotte als Schälgut 23 gezeigt. Die jeweils an gegenüberliegenden Seiten des Schälgutes 23 angreifenden beiden Messer 4, 6 bzw. 5, 7 liegen jeweils in einer Ebene, die quer zur Schälrichtung 22 steht. Diese beiden Messer 4,6 bzw. 5, 7 weisen jeweils gleichen Abstand von der Schwenkachse 3 auf.

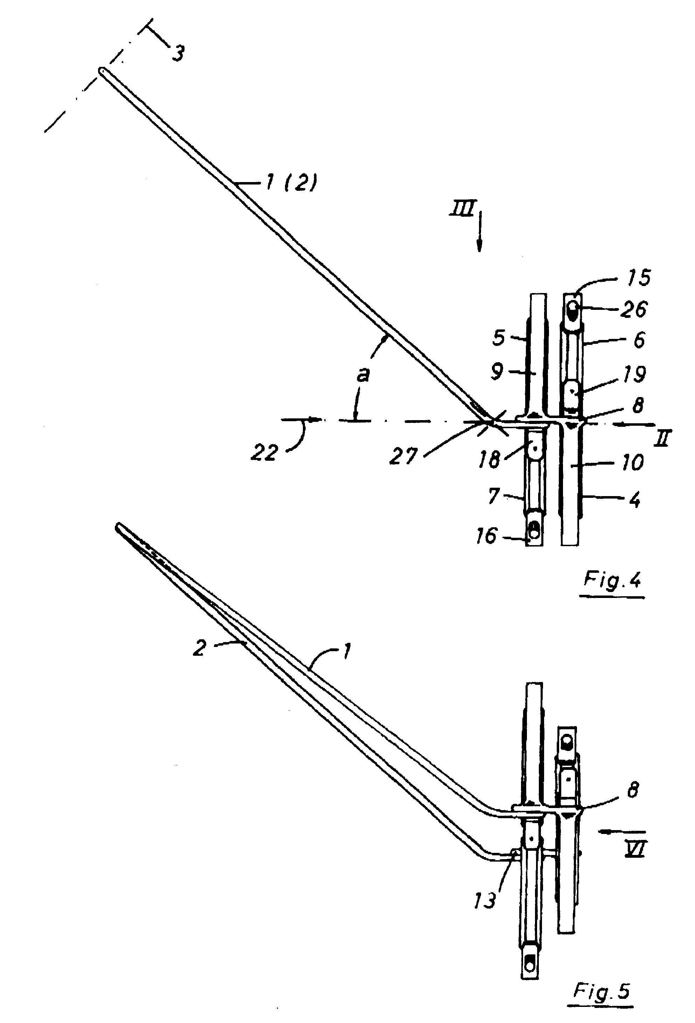

Die Schälmesser 4 bis 7 sind jeweils sogenannte Pendelklingen, die aus einer länglichen Klingenschneide 24 und einem im Abstand von der Klingenschneide 24 befindlichen, über das Schälgut gleitenden Rückensteg 25 bestehen. Es sind hier übliche, auswechselbare Pendelklingen gezeigt, die drehbar in den Abwinklungen 14 bis 17 bzw. den Winkelstücken 18 bis 21 gelagert sind und nach Lösen einer Schraube 26 ausgewechselt werden können. Die Betätigungshebel 1, 2 sind gegenüber einer Ebene, die von der Schälrichtung 22 und von einer Verbindungslinie 33 zwischen den freien Enden der Betätigungshebel 1, 2 aufgespannt ist, um einen Winkel a von etwa 45° geneigt. Hierzu sind die Betätigungshebel 1, 2 unmittelbar hinter ihren freien Enden um eine Biegelinie 27 nach oben abgewinkelt, vgl. auch Fig. 4.

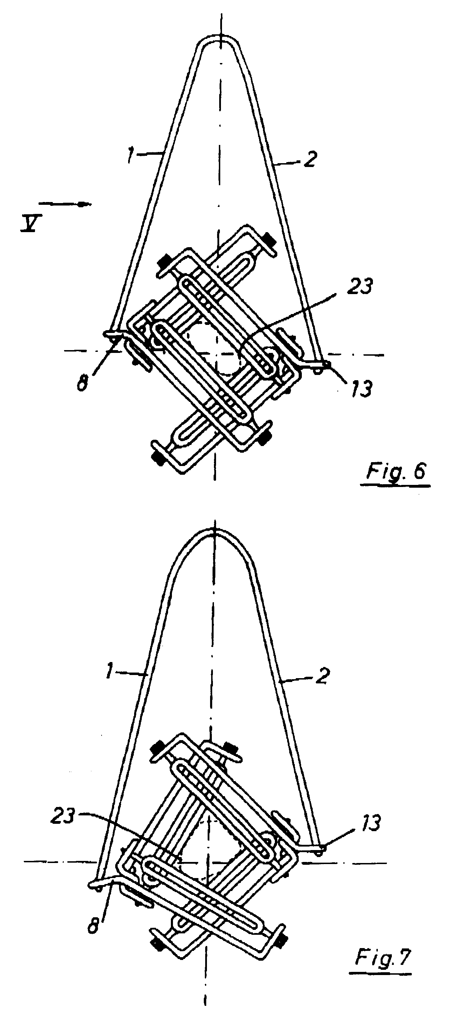

Beim Schälen eines geraden, im Querschnitt runden Schälgutes legen sich die Messer in einer quadratischen Ausrichtung gemäß Fig. 2 an das Schälgut an. Aber auch an ein im Querschnitt unrundes, z.B. ovales, Schälgut stellen sich alle vier Messer gleichzeitig an, wie in Fig. 6 veranschaulicht ist. Diese Anpaßbarkeit wird durch die elastische Auslenkbarkeit der Betätigungshebel 1, 2 quer zu der von ihnen aufgespannten Ebene ermöglicht. Diese Auslenkung ergibt sich selbsttätig, wenn die Betätigungshebel 1, 2 von Hand in ihrer Hauptschwenkrichtung gegeneinander an ein unrundes Schälgut 23 angedrückt werden. Die sich dabei ergebende ausgelenkte Stellung der Betätigungshebel 1 und 2 ist in der Seitenansicht nach Fig. 5 veranschaulicht. Eine solche Auslenkung erfolgt auch bei dem in Fig. 1 gezeigten gewundenen Schälgut 23, wenn das Handgerät geradlinig in Schälrichtung 22 mit der anderen Hand bewegt wird, und zwar immer dann, wenn ein gegenüber der Schälrichtung 22 geneigter Abschnitt des Schälgutes 23 sich zwischen den vier Messern befindet.

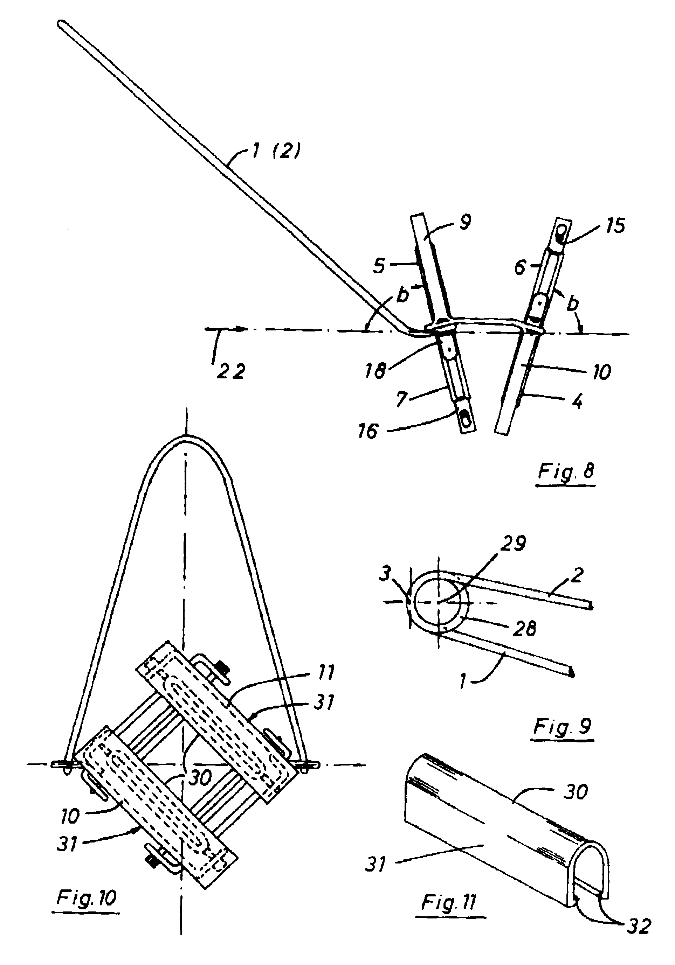

Da die aus Federdraht bestehenden Betätigungshebel 1, 2 auch um ihre Längsachse torsionselastisch sind, können sich die Messer 4 bis 7, je nach der Form des eingefaßten Schälgutes auch zu einem unregelmäßigen Viereck selbsttätig einstellen, vgl. Fig.7.

Beim Ausführungsbeispiel nach Fig. 8 sind die beiden an gegenüberliegenden Seiten des Schälgutes 23 angreifenden Schälmesser 4, 6 bzw. 5, 7 jeweils in entgegengesetzte Richtungen um einen gleichen Anstellwinkel b von etwa 80° gegenüber der Schälrichtung 22 geneigt, so daß alle Messer mit einem sogenannten "ziehenden Schnitt" am Schälgut angreifen.

In Fig. 9 ist eine abgewandelte Ausführungsform des Gelenkbereiches der Betätigungshebel 1, 2 gezeigt. Die einstückig aus einem Drahtstück hergestellten Betätigungshebel 1, 2 gehen hier über eine Windungsschlaufe 28 ineinander über, deren Mittelachse 29 parallel zur Schwenkachse 3 gerichtet ist. Die Schlaufe 28 hat eine zum Durchstecken eines Fingers ausreichende Innenweite.

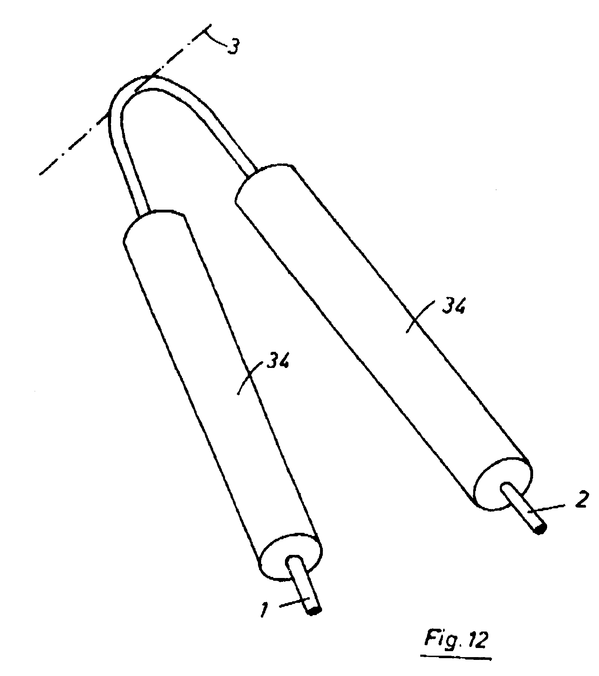

Die Fig. 10 und 11 veranschaulichen eine Möglichkeit, den Vier-Messer-Schäler in einen Zwei-Messer-Schäler umzuwandeln. Zu diesem Zweck sind dort auf die beiden sich gegenüberliegenden Schälmesser 4 und 6 jeweils eine an ihrem Rücken 30 abgerundete Haube 31 aufgesteckt, die jeweils mittels Rastnasen 32 an die Arme 10 und 11 aufgeschnappt sind. Die sich gegenüberliegenden Rücken 30, 30 bilden hier eine Anlageführung für das Schälgut.

Fig. 12 veranschaulicht eine abgewandelte Ausführungsform der Betätigungshebel, bei der an den im Griffbereich liegenden Abschnitten der aus Federstahl bestehenden Betätigungshebel 1, 2 rundliche Griffstücke 34 aus Kunststoff angebracht sind.

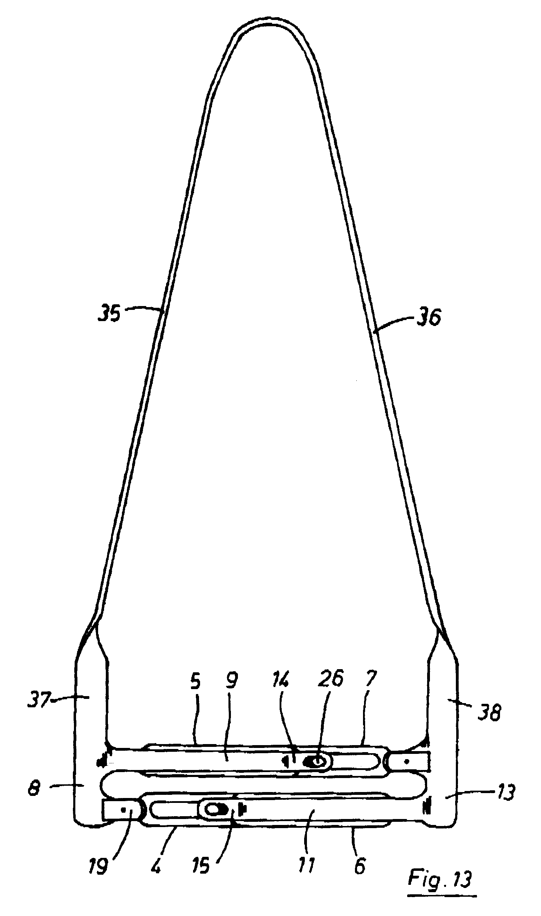

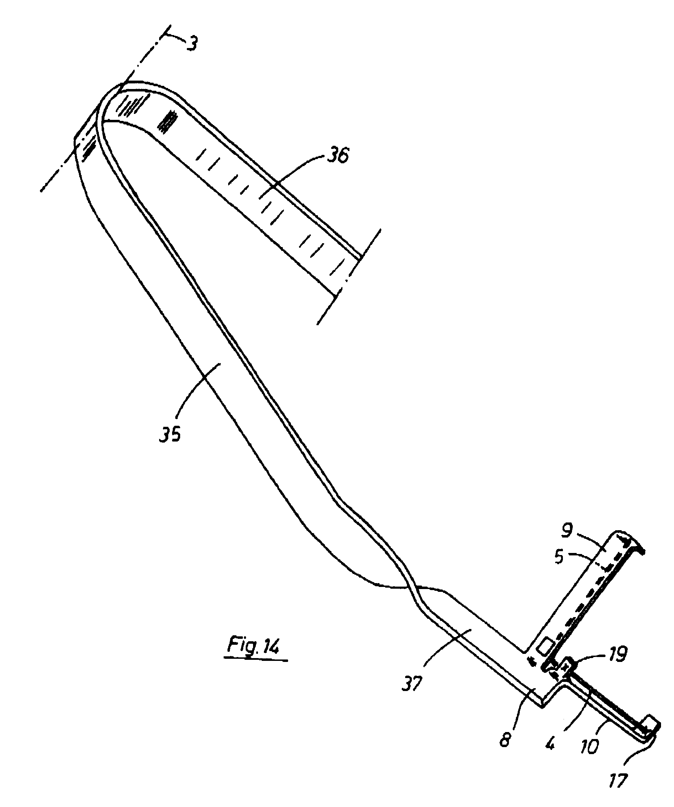

Bei der Ausführungsform nach den Fig. 13 und 14 bestehen die Betätigungshebel 35, 36 aus einem durchgehenden Flachmaterialstreifen aus Stahl oder Kunststoff, der im Bereich der Schwenkachse 3 und über den Griffbereich hinweg hochkant steht und an den beiden Enden in um etwa 90° verdrehte Abschnitte 37, 38 übergeht, die die Halter 8, 13 tragen. Die Betätigungshebel 35, 36 und die Halter 8, 13 samt aller Abwinklungen 14 bis 21 für die Messereinspannung bestehen aus einem einzigen Teil, z.B. einem Stanzbiegeteil oder einem einstückigen Kunststoffspritzteil.
- 1: Betätigungshebel
- 2: Betätigungshebel
- 3: Schwenkachse
- 4: Schälmesser
- 5: Schälmesser
- 6: Schälmesser
- 7: Schälmesser
- 8: Halter
- 9: Arm
- 10: Arm
- 11: Arm
- 12: Arm
- 13: Halter
- 14: Abwinklung
- 15: Abwinklung
- 16: Abwinklung
- 17: Abwinklung
- 18: Winkelstück
- 19: Winkelstück
- 20: Winkelstück
- 21: Winkelstück
- 22: Schälrichtung
- 23: Schälgut
- 24: Klingenschneide
- 25: Rückensteg
- 26: Schraube
- 27: Biegelinie
- 28: Windungsschlaufe
- 29: Mittelachse
- 30: Rücken
- 31: Haube
- 32: Rastnase
- 33: Verbindungslinie
- 34: Griffstücke
- 35: Betätigungshebel
- 36: Betätigungshebel
- 37: verdrehte Abschnitte
- 38: verdrhete Abschnitte
- a: Winkel
- b: Anstellwinkel

## Patentansprüche

1. Handgerät zum Schälen von länglichem Gemüse-Schälgut in Form einer mit einer Hand umgreifbaren Handzange mit zwei gegen Federkraft um eine Schwenkachse (3) gegeneinander in eine Arbeitsstellung schwenkbaren Betätigungshebeln (1, 2), die an ihren freien Enden sich gegenüberliegende Schälmesser (4 bis 7) tragen, zwischen denen das Schälgut (23) im wesentlichen parallel zur Schälrichtung (22) mit der anderen Hand gehalten wird, dadurch gekennzeichnet,
- daß an den Enden beider Betätigungshebel (1, 2) je ein Schälmesserpaar (4/5; 6/7) angebracht ist, das aus jeweils zwei, einen Winkel zueinander bildenden Schälmessern (4, 5; 6, 7) besteht,
- daß die Schälmesserpaare (4/5; 6/7) mit ihrer offenen Seite gegeneinander gerichtet sind,
- daß die Schälmesser (4, 5, 6, 7) in Schälrichtung (22) derart gegeneinder versetzt sind, daß die Schälmesserpaare (4/5; 6/7) unter gegenseitiger Überlappung und gleichzeitiger Anlage ihrer vier Schälmesser an das Schälgut (23) zusammenschwenkbar sind, und
- daß die Betätigungshebel (1, 2) quer zu der von ihnen aufgespannten Ebene gegen Federkraft auslenkbar sind.

2. Handgerät nach Anspruch 1, dadurch gekennzeichnet,
- daß die Schälmesser (4, 5; 6, 7) bei jedem Schälmesserpaar (4/5; 6/7) in Schälrichtung (22) gegeneinander versetzt sind und
- daß jeweils die beiden Schälmesser (4, 6 bzw. 5, 7), die in der Arbeitsstellung an sich gegenüberliegenden Seiten des Schälgutes (23) angreifen, den gleichen Abstand zur Schwenkachse (3) der Betätigungshebel (1, 2) aufweisen.

3. Handgerät nach den Ansprüchen 1 und 2, dadurch gekennzeichnet, daß die Schälmesser (4, 5; 6, 7) jeden Paares um einen Winkel zwischen 45° und 135°, insbesondere von 90°, gegeneinander geneigt sind.

4. Handgerät nach den Ansprüchen 1 bis 3, dadurch gekennzeichnet, daß die Betätigungshebel (1, 2) gegenüber einer Ebene, die von der Schälrichtung (22) und von der Verbindungslinie (33) der freien Enden der Betätigungshebel (1, 2) aufgespannt ist, um einen Winkel (a) zwischen 30° bis 90° geneigt sind.

5. Handgerät nach den Ansprüchen 1 bis 4, dadurch gekennzeichnet, daß jeweils die beiden an gegenüberliegenden Seiten des Schälgutes (23) angreifenden Schälmesser (4, 6; 5, 7) in entgegengesetzte Richtungen um einen gleichen Anstellwinkel (b), der etwas unter 90°, vorzugsweise bei 80°, liegt, gegenüber der Schälrichtung (22) geneigt sind.

6. Handgerät nach den Ansprüchen 1 bis 5, dadurch gekennzeichnet, daß die Betätigungshebel (1, 2) in Richtung der Schwenkachse (3) biegeelastisch oder schwenkbar gelagert sind.

7. Handgerät nach Anspruch 6, dadurch gekennzeichnet, daß die Betätigungshebel (1, 2) zumindest im Bereich der Schwenkachse (3) aus einem gebogenen federelastischen Drahtstück bestehen.

8. Handgerät nach Anspruch 7, dadurch gekennzeichnet, daß das Drahtstück im mittleren Bereich eine aus einer oder mehreren Windungen bestehenden Schlaufe (28) enthält, deren Mittelachse (29) parallel zur Schwenkachse (3) gerichtet ist.

9. Handgerät nach Anspruch 6, dadurch gekennzeichnet, daß die Betätigungshebel (35, 36) aus einem Flachmaterialstreifen aus Stahl oder Kunststoff bestehen, der im Bereich der Schwenkachse (3) und über den Griffbereich hinweg hochkant steht und an den beiden Enden in um etwa 90° verdrehte Abschnitte (37, 38) übergeht, die die Halter (8, 13) tragen.

10. Handgerät nach Anspruch 9, dadurch gekennzeichnet, daß die Betätigungshebel (35, 36) und die Halter (8, 13) samt ihrer Abwinklungen (14 bis 17) und ihrer Winkelstücke (18 bis 21) aus einem einzigen Stanzbiegeteil oder einem einstückigen Kunststoffspritzteil bestehen.

11. Handgerät nach einem oder mehreren der Ansprüche 1 bis 10, gekennzeichnet durch zwei zugeordnete, über gegenüberliegende Schälmesser (4, 6) setzbare Abdeckhauben (31).

12. Handgerät nach einem der vorhergehenden Ansprüche, dadurch gekennzeichnet, daß die Betätigungshebel starr sind und an ihnen eine vorzugsweise an der Schwenkachse angebrachte Spreizfeder angreift.

13. Handgerät nach einem der Ansprüche 1 bis 6 und 12, dadurch gekennzeichnet, daß die Betätigungshebel über die Schwenkachse hinaus verlängerte Abschnitte aufweisen und an den Betätigungshebeln eine Feder angreift, die die Hebel in die Arbeitsstellung bewegt, aus der sie durch Zusammendrücken der verlängerten Abschnitte herausbewegbar sind.

14. Handgerät nach einem der Ansprüche 3 bis 13, dadurch gekennzeichnet, daß der Winkel zwischen den beiden Schälmessern jeden Paares stufenlos veränderbar und die gewählte Winkelstellung jeweils arretierbar ist.

15. Handgerät nach einem der vorhergehenden Ansprüche, dadurch gekennzeichnet, daß ober- und unterhalb der Schälmesserpaare zwei weitere identisch ausgebildete Messerpaare angeordnet sind, die in der gleichen Weise wie die Schälmesserpaare an zwei zusätzlichen Hebeln befestigt sind, deren Schwenkebene in einem Winkel von 45° zu der Schwenkebene der Betätigungshebel verläuft und die gleichzeitig mit diesen betätigbar sind.

## Claims

1. Hand tool for peeling elongated peelable vegetables, in the form of a pair of hand-pliers which can be held in one hand, with two operating levers (1,2), which may be pivoted towards one another around a pivotal axis (3) against spring resistance into the operating position, and which at their free ends have peeling blades (4 to 7) positioned opposite one another, between which the vegetable (23) is held with the other hand essentially parallel to the peeling direction (22), characterized in that
- one peeling-blade pair (4/5; 6/7), consisting of two peeling blades (4,5; 6,7) at an angle to one another, is attached to the end of each operating lever (1,2).
- the peeling-blade pairs (4/5; 6/7) are positioned with their open sides facing one another,
- the peeling blades (4,5,6,7) are offset with respect to one another in the peeling direction (22) in such a way that the peeling-blade pairs (4/5; 6/7) may be pivoted towards one another, mutually overlapping and with their four peeling blades simultaneously touching the vegetable (23) and
- the operating levers (1,2) may be pulled apart against spring resistance in a direction perpendicular to the plane spanned by them.

2. Hand tool as claimed in Claim 1, characterized in that
- the peeling blades (4,5; 6,7) in each peeling-blade pair (4/5; 6/7) are offset with respect to one another in the peeling direction (22) and
- in each case the two peeling-blades (4,6 or 5,7) which in the operating position engage on opposite sides of the vegetable (23) are at the same distance from the pivotal axis (3) of the operating levers (1,2).

3. Hand tool as claimed in Claims 1 and 2, characterized in that the peeling blades (4,5; 6,7) of each pair are inclined at an angle of between 45° and 135°, particularly of 90°, to one another.

4. Hand tool as claimed in Claims 1 to 3, characterized in that the operating levers (1,2) are inclined at an angle (a) of between 30° and 90° to a plane defined by the peel direction (22) and the line (33) connecting the free ends of the operating levers (1,2).

5. Hand tool as claimed in Claims 1 to 4, characterized in that in each case the two peeling-blades (4,6; 5,7) engaging on opposite sides of the vegetable (23) are inclined in opposite directions at the same setting angle (b), which is slightly below 90° and preferably around 80°, with respect to the peel direction (22).

6. Hand tool as claimed in Claims 1 to 5, characterized in that the operating levers (1,2) are mounted so as to enable them to be elastically bent or swivelled in the direction of the pivotal axis (3).

7. Hand tool as claimed in Claim 6, characterized in that at least in the area of the pivotal axis (3) the operating levers (1,2) consist of a bent piece of elastically sprung wire.

8. Hand tool as claimed in Claim 7, characterized in that the piece of wire has a coiled loop (28) in its central area, consisting of one or more loops, whose central axis (29) is aligned parallel to the pivotal axis (3).

9. Hand tool as claimed in Claim 6, characterized in that the operating levers (35,36) consist of a flat strip of material made of steel or plastic, which in the area of the pivotal axis (3) and up to the holding area and beyond stands on its edge and which at its two ends passes into sections (37,38) which are twisted by about 90° and which carry the holders (8,13).

10. Hand tool as claimed in Claim 9, characterized in that the operating levers (35,36) and the holders (8,13) together with their angled-off sections (14 to 17) and their angular pieces (18 to 21) consist of a single, bent, pressed part or of a one-piece moulded plastic part.

11. Hand tool as claimed in one or more of Claims 1 to 10, characterized by two protective hoods (31) to be placed over opposite peeling blades (4,6).

12. Hand tool as claimed in one of the foregoing claims, characterized in that the operating levers are rigid and that a bracing spring, preferably attached to the pivotal axis, engages upon them.

13. Hand tool as claimed in one of Claims 1 to 6 and Claim 12, characterized in that the operating levers have elongated sections extending beyond the pivotal axis and that a spring engages upon the operating levers which moves the levers into the operating position, out of which they may be moved by pressing together the elongated sections.

14. Hand tool as claimed in Claims 3 to 13, characterized in that the angle between the two peeling blades of each pair may be gradually altered and any selected angle setting may be secured by locking.

15. Hand tool as claimed in one of the foregoing claims, characterized in that above and below the peeling-blade pairs two further identically designed pairs of blades are located, which, in the same way as the peeling-blade pairs, are fixed to two additional levers, whose pivotal plane is at an angle of 45° to the pivotal plane of the operating levers and which may be operated simultaneously with the latter.

## Revendications

1. Outil à main pour peler des légumes à pelures allongées, se présentant sous la forme d'une pince à main pouvant être saisie d'une main, avec deux leviers d'actionnement (1, 2) pouvant pivoter l'un vers l'autre autour d'un axe de pivotement (3) à l'encontre de la force d'un ressort, pour passer en une position de travail et portant à leurs extrémités libres des lames de pelage (4 à 7) placées en regard les unes des autres, entre lesquelles les pelures (23) sont maintenues sensiblement parallèles à la direction de pelage (22), par l'autre main, caractérisé par le fait que :
- sur les extrémités de chacun des deux leviers d'actionnement (1, 2) est montée une paire de lames de pelage (4/5 ; 6/7) composée pour chacune de lames de pelage (4,5 ; 6,7) faisant un angle entre elles
- les paires de lames de pelage (4/5 ; 6/7) sont orientées avec leurs faces ouvertes tournées l'une vers l'autre,
- les lames de pelage (4, 5, 6, 7) sont décalées dans la direction de pelage (22) l'une par rapport à l'autre, de manière que les paires de lames de pelage (4/5 ; 6/7) soient susceptibles d'être rapprochées par pivotement, avec un chevauchement mutuel et un appui simultané de leurs quatre lames de pelage sur le légume à peler (23), et
- les leviers d'actionnement (1, 2) peuvent être écartés à l'encontre de la force d'un ressort par débattement transversalement par rapport au plan qu'ils enserrent.

2. Outil à main selon la revendication 1, caractérisé par le fait que :
- les lames de pelage (4,5 ; 6,7) sont décalées les unes par rapport aux autres dans la direction de pelage (22) pour chaque paire de lames de pelage (4/5 ; 6/7), et
- les deux lames de pelage (4, 6 ou 5, 7) agissant respectivement, en position de travail, sur les faces opposées du produit à peler (23), présentent le même espacement par rapport à l'axe de pivotement (3) des leviers d'actionnement (1, 2).

3. Outil à main selon les revendications 1 et 2, caractérisé en ce que les lames de pelage (4, 5 ; 6, 7) de chaque paire sont inclinées les unes par rapport aux autres d'un angle compris entre 45° et 135°, en particulier de 90°.

4. Outil à main selon les revendications 1 à 3, caractérisé en ce que les leviers d'actionnement (1, 2) sont inclinés d'un angle (a), compris entre 30 et 90°, par rapport à un plan constitué par la direction de pelage (22) et la ligne de liaison (33) des extrémités libres des leviers d'actionnement (1, 2).

5. Outil à main selon les revendications 1 à 4, caractérisé en ce que les deux lames de pelage (4, 6 ; 5, 7), agissant respectivement sur des faces opposées du produit à peler (23), sont inclinées dans des directions opposées par rapport à la direction de pelage (22), d'un même angle d'attaque (b), un peu inférieur à 90°, de préférence de 80°.

6. Outil à main selon les revendications 1 à 5, caractérisé en ce que les leviers d'actionnement (1, 2) sont montés avec une élasticité en flexion ou bien de façon à pouvoir pivoter dans la direction de l'axe de pivotement (3).

7. Outil à main selon la revendication 6, caractérisé en ce que les leviers d'actionnement (1, 2) sont composés, au moins dans la zone de l'axe de pivotement (3), d'une pièce en fil métallique pliée, ayant l'élasticité d'un ressort.

8. Outil à main selon la revendication 7, caractérisé en ce que la pièce en fil métallique contient, dans la zone médiane, une boucle (28), constituée d'une ou plusieurs spires et dont l'axe médian (29) est orienté parallèlement à l'axe de pivotement (3).

9. Outil à main selon la revendication 6, caractérisé en ce que les leviers d'actionnement (35, 36) sont réalisés en une bande de matériau plat, en acier ou en matière plastique, s'étendant de chant dans la zone de l'axe de pivotement (3) et sur la zone de préhension et se transformant aux deux extrémités en des sections (37, 38) tournées d'à peu près 90° et portant les supports (8, 13).

10. Outil à main selon la revendication 9, caractérisé en ce que les leviers d'actionnement (35, 36) et les supports (8, 13) avec leurs coudes (14 à 17) et leurs pièces d'angle (18 à 21) sont composés d'une partie unique, obtenue par flexion et estampage, ou bien d'une partie unique, obtenue par moulage par injection de matière plastique.

11. Outil à main selon l'une ou plusieurs des revendications 1 à 10, caractérisé par deux capots de recouvrement (31) associés, pouvant être placés sur des lames de pelage (4, 6) opposées.

12. Outil à main selon l'une des revendications précédentes, caractérisé en ce que les leviers d'actionnement sont rigides et un ressort d'écartement, monté de préférence sur l'axe de pivotement, agit sur eux.

13. Outil à main selon l'une des revendications 1 à 6 et 12, caractérisé en ce que les leviers d'actionnement présentent des sections prolongées au-delà de l'axe de pivotement et, sur les leviers d'actionnement, agit un ressort déplaçant les leviers en position de travail, d'où ils peuvent être ressortis, par compression de regroupement des sections prolongées.

14. Outil à main selon l'une des revendications 3 à 13, caractérisé en ce que l'angle antre les deux lames de pelage de chaque paire est modifiable de façon continue et la position angulaire chaque fois choisie peut être bloquée.

15. Outil à main selon l'une des revendications précédentes, caractérisé en ce que deux autres paires de lames, réalisées à l'identique, sont disposées au-dessus et au-dessous des paires de lames de pelage et fixées de la même manière que sont fixées les paires de lames de pelage, sur deux leviers supplémentaires, dont le plan de pivotement s'étend sous un angle de 45° par rapport au plan de pivotement des leviers d'actionnement et qui sont simultanément actionnables avec ceux-ci.
